(19) **Europäisches Patentamt**

**European Patent Office**

**Office européen des brevets**

(11) **EP 0 744 882 B1**

(12) **EUROPEAN PATENT SPECIFICATION**

(45) Date of publication and mention
of the grant of the patent:
**11.07.2001 Bulletin 2001/28**

(51) Int Cl.⁷: **H05B 37/02**

(21) Application number: **96107259.2**

(22) Date of filing: **08.05.1996**

(54) **Zero-hysteresis crepuscular relay**

Dämmerungsschalter mit Null-Hysterese

Interrupteur crépusculaire à Hystérésis nul

(84) Designated Contracting States:
**AT DE FR GB**

(30) Priority: **26.05.1995 IT TO950424**

(43) Date of publication of application:
**27.11.1996 Bulletin 1996/48**

(73) Proprietor: **FINDER S.p.A.**
**10042 Nichelino (Torino) (IT)**

(72) Inventors:
• **Vandi, Tiziano**
**10053 Bussoleno (Turin) (IT)**
• **Bocchio, Renato**
**10010 Banchette-Ivrea (Turin) (IT)**

(74) Representative: **Robba, Eugenio et al**
**Studio "INTERPATENT"**
**via Caboto 35**
**10129 Torino (IT)**

(56) References cited:
**DE-A- 3 031 000**     **DE-B- 1 764 412**

EP 0 744 882 B1

# Description

The present invention refers to a crepuscular type of relay, called "zero-hysteresis" relay since it allows eliminating the operating hysteresis for these relays, with high energy savings.

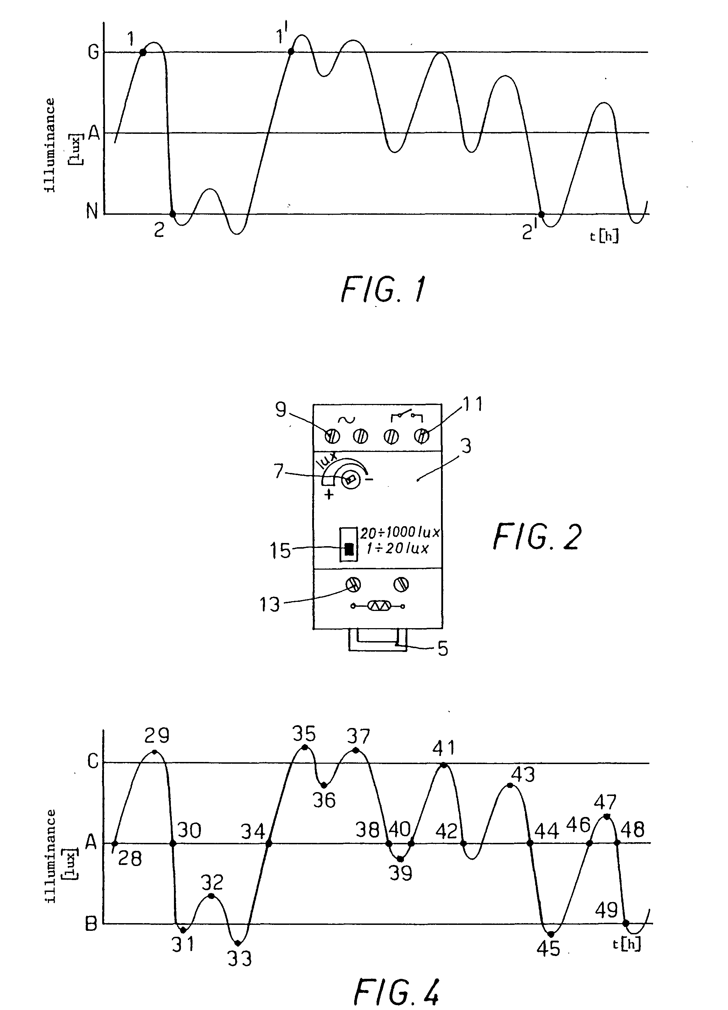

Crepuscular relays are well known in the art: their distinctive feature is being equipped with photo-sensitive elements, that make them turn on or off according to the degree of illuminance of the environment where such relays are located: thus, for example, if these relays control turning on of public lighting lamps, at nightfall, that is when a certain illuminance threshold is exceeded, they trip making the lamps connected thereto turn on. The crepuscular relay operation is schematically shown in the diagram in Fig. 1, that shows the behaviour in time (expressed in hours) of the illuminance (expressed in lux); when in time information provided by the photo-sensitive element exceed the threshold given by line G, the relay is turned off (point 1 and 1'), thus turning off the lamps since daybreak occurs; viceversa, when illuminance falls down to the lower threshold in line N, it means that night is falling and the relay trips and turns on in points 2 and 2'.

As can be seen in the diagram in Fig. 1, the crepuscular relay operation is not optimum, since the interval between line G and line N is very wide (the ratio G = 4N is commonly valid): the relay tripping points (1, 1', 2, 2') are intentionally kept very far away to avoid that the relay undesiredly trips when small or temporary illuminance changes occur (for example, a darkening generated by stormy clouds during the day, or a car passing with headlights on during the night). To solve this problem, therefore, the relays usually keep lights (for example public lighting lamps) on for a time and an illuminance that are greater than the practically necessary ones, with high energy wastes: this appears evident in the interval between points 1' and 2', where a lot of time passes between turning off (1') and new turning on (2') of the relay. While in the case shown there are no excessive wastes, the opposite behaviour, that is the time passing between a turning on and the following turning off, is surely critical if it lasts too long.

Object of the present invention is solving the above problems, providing a relay that is not sensitive to small or temporary illuminance changes and at the same time can trip, being turned on and off, in an optimum operation, next to the same illuminance value. The relay of the present invention allows eliminating hysteresis between tripping thresholds of traditional relays and obtaining energy savings, computed by the Applicant of the present invention, equal to about 5Ø,ØØØ Lire every year for a public road with 25 street-lamps.

The above and other objects and advantages of the present invention, as will appear from the following description, are obtained by a zero-hysteresis crepuscular relay as claimed in Claim 1.

The present invention will be better described by some preferred embodiments thereof, given as a non-limiting example, with reference to the enclosed drawings, in which:

- Figure 1 is a graph showing the operation of a prior art crepuscular relay;
- Figure 2 is an outside front view of an embodiment of the crepuscular relay of the present invention;
- Figure 3 is a block diagram of the main parts composing the relay of the present invention;
- Figure 4 is a graph similar to the graph in Fig. 1, that shows the operation of the crepuscular relay of the present invention; and
- Figure 5 is the representation of an embodiment of the hysteresis-recovering circuit showing input and output signals, to establish the equations of state controlling the operation thereof.

Figure 1 is a graph showing the operation of a prior art crepuscular relay and has already been previously described.

With reference to Fig. 2, the crepuscular relay of the present invention comprises an external supporting case 3 equipped with an element 5 to secure it to a DIN-type bar. In the front part shown, the case 3 is equipped with a knob 7 to adjust the illuminance value and with a plurality of commonly known screw clamps 9, 11, 13. It is further possible, through the selector 15, to choose two different types of illuminance scales (in the embodiment shown, they are respectively equal to 1 ÷ 2Ø lux and to 2Ø ÷ 1ØØØ lux).

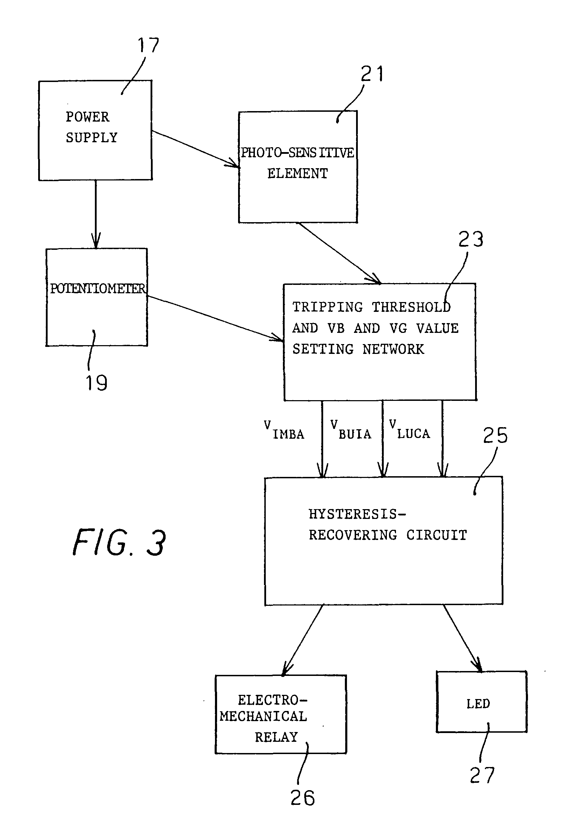

With reference now to Fig. 3, the crepuscular relay of the present invention substantially comprises a power supply 17 for all circuits the relay itself is composed of, a potentiometer 19 to adjust illuminance values and a photo-sensitive element 21, that constantly sends current illuminance values to the relay itself. The photo-sensitive element 21 can be integrated into, or separated from, the crepuscular relay and can be placed and connected at a maximum distance equal to about 5Ø m with respect to the relay. The potentiometer 19 and the photo-sensitive element 21 are connected and form part of a network 23 composed of common electronic components, whose purpose is outputting three voltage signals, $V_{IMBA}$, $V_{BUIA}$ and $V_{LUCA}$, that respectively correspond to the three illuminance values, the threshold one, the lower limit one that corresponds to a situation of darkness, and the upper limit one that corresponds to a light situation of light. The three signals $V_{IMBA}$, $V_{BUIA}$ and $V_{LUCA}$ are inputted to a control circuit 25, that is the characterizing part of the present invention, and whose purpose is recovering the hysteresis.

In order to avoid that sudden and temporary illuminance changes alter the correct relay operation, a time offset circuit (not shown) is provided, that sends three other signals, corresponding to the above-mentioned $V_{IMBA}$, $V_{BUIA}$ and $V_{LUCA}$, but provided with a delay timing (that is usually equal to 5 seconds for turning

on and to 2Ø seconds for turning off), so that the relay trips only if the values between the two pairs of three signals each are mutually corresponding. Should such correspondence lack, this means that a temporary event occurred (stormy clouds in the day or car headlights in the night), that must not be taken into account to rate current illuminance.

The circuit 25 operation will be described in detail below; the circuit 25 is connected to an electro-mechanical relay 26 or to another equivalent switching device, and to a light-emitting element 27, for example a LED (Light Emitting Diode), that signals, getting various fixed or intermittent colours, the environmental illuminance status. Moreover, the circuit 25 controls the operation of the relay itself, turning it on and off (together, for example, with street-lamps or lamps connected thereto) depending on current illuminance values, coming from the photo-sensitive element 21, that are continuously inputted thereto, converted into voltages and related to the three above signals.

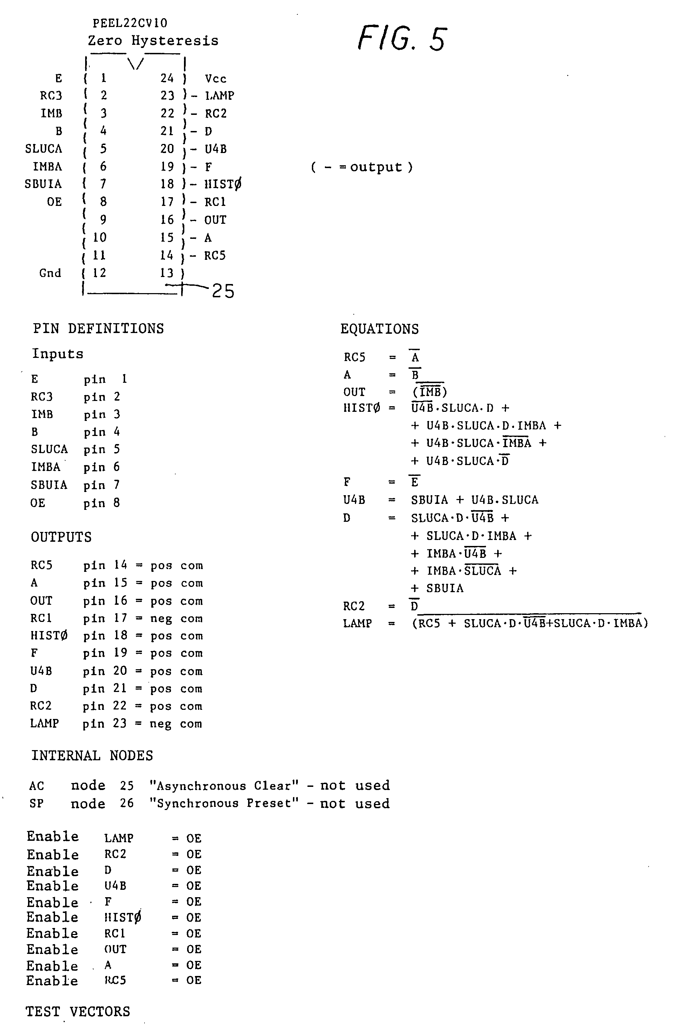

The circuit 25 is an electronic circuit, that can be realized in practice according to the common manufacturing techniques and using both analogue components and integrated or programmable-logic components or the like. The characterizing part of the circuit 25 is obviously the operation thereof applied to the relay of the present invention: in order to completely described such circuit 25 without misunderstandings, it is therefore necessary to refer to Figure 5, that is the representation of an embodiment of the hysteresis-recovering circuit, pointing out input and output signals, to establish the equations of state controlling the operation thereof: in fact, any electronic technician is easily able, starting from Figure 5 and from the information contained therein, to make a circuit realizing its function.

The equations of state, that mutually relate input and output signals shown in Fig. 5 and that control the circuit 25 operation are:

$$RC5 = \bar{A}$$

$$A = \bar{B}$$

$$OUT = \overline{(\overline{IMB})}$$

$$HIST\emptyset = \overline{U4B}\cdot SLUCA\cdot D +$$

$$+ U4B\cdot SLUCA\cdot D\cdot IMBA +$$

$$+ U4B\cdot SLUCA\cdot \overline{IMBA} +$$

$$+ U4B\cdot SLUCA\cdot \overline{D}$$

$$F = \bar{E}$$

$$U4B = SBUIA + U4B\cdot SLUCA$$

$$D = SLUCA\cdot D\cdot \overline{U4B} +$$

$$+ SLUCA\cdot D\cdot IMBA +$$

$$+ IMBA\cdot \overline{U4B} +$$

$$+ IMBA\cdot \overline{SLUCA} +$$

$$+ SBUIA$$

$$RC2 = \bar{D}$$

$$LAMP = \overline{(RC5 + SLUCA\cdot D\cdot \overline{U4B} + SLUCA\cdot D\cdot IMBA)}$$

The operation of the crepuscular relay according to the present invention will now be described, with reference to Figure 4, that is the complete operating diagram thereof. For an easy comparison and to immediately point out energy savings connected to the relay of the present invention, both in Fig. 1 and in Fig. 4 the same illuminance behaviour has been included expressed in lux with respect to the time expressed in hours.

In Fig. 4, line A represents the tripping threshold value (corresponding to $V_{IMBA}$), line B the lower illuminance value (corresponding to $V_{BUIA}$) and line C the upper illuminance value (corresponding to $V_{LUCA}$). The presence of the two upper and lower limits (that are usually linked to the tripping threshold by formulae of the type A = 2B and C = 2A) is useful to prevent relay trips for temporary illuminance changes where a trip would be undesired; contrary to the traditional crepuscular relays, however, the presence of these two limits is not accompanied by energy wastes, since the relay trip always occurs next to threshold A: thus, from the two limits B and C all benefits for the correct relay operation can be gained, without getting any energy problem. In any case, the presence of the timing delay for signals $V_{IMBA}$, $V_{BUIA}$ and $V_{LUCA}$ allows removing the risk of undesired relay interventions.

First of all, it is necessary to state that the normal operation, that is the most commonly occurring one, of the crepuscular relay of the present invention is the one in which, every time the current illuminance value crosses the tripping threshold (or the corresponding illuminance value), the relay trips: for example, in Fig. 4, there occurs a turning off trip in 28, when there is enough light, then there is a peak in 29, where the upper limit C is crossed, and then there occurs a turning on trip in 3Ø,

when illuminance drops. The trip in 3Ø has been made possible because the circuit 25 recorded that limit C had been previously exceeded; otherwise, as will be better described afterwards, this trip would have not occurred.

After turning on in 3Ø, there is a varying behaviour of the illuminance curve in the following hours, where anyway the lower limit B is reached and exceeded both in 31 and in 33. The temporary peak value in 32, being lower that the tripping threshold A, did not make the relay trip; the turning off trip occurs in 34, because the circuit 25 had recorded that the lower limit B had been reached. A similar situation to the one in points 31, 32 and 33 respectively arises for points 35, 36 and 37 around the upper limit C. The correct turning on will therefore occur in 38, when illuminance reaches the tripping value A.

Up to this time, as can be noted, turning on and off in points 28, 3Ø, 34 and 38 all occurred next to threshold A, while temporary peaks 32 and 36 did not pose any problem, like in traditional crepuscular relays. This is the most usual, most common and most frequent operating case for the relay of the present invention: comparing the behaviour of the trips thereof with the one of the traditional relay in Fig. 1, it appears immediately evident that, compared with the three trips in 1, 2 and 1' at high illuminance values, the relay of the present invention tripped much less and at lower values, with following high energy savings: in fact, hysteresis is recovered next to peaks 29, 31, 33, 35 and 37.

Moreover, the relay of the present invention allows coping with anomalous behaviours, like those shown after point 38 in Fig. 4: while the traditional relay in Fig. 1 never trips, if not in 2', next to these behaviours, the relay of the present invention is still activated several times, each one generating other energy savings, even in anomalous situations.

The anomaly after turning-on point 38 is that there is a "small" illuminance decrease, down to 39, and then a new increase up to the turning-off points 41: in this case, even if the tripping threshold line A is again crossed in 4Ø, turning off does not occur there, because the lower limit B had not been previously reached. This is the so-called "false night" case, and hysteresis among points 38, 39 and 4Ø in this case is not recovered.

After turning off in 41 and the following turning on in 42, the temporary peak in 43 is ignored, because it does not exceed the upper limit C and therefore it does not generate any trip in 44, while the lower limit B being exceeded by peak 45 is recorded (and hysteresis is recovered in this area), so that the following turning off will occur in 46. Then, in 47 there occurs a similar event to the one in point 43 and opposed to the previous point 39, that is the "false day", so that the upper limit C is not exceeded, and the relay does not trip in 48, but in 49, when lower limit B is reached.

Finally, to cope with anomalous situations from point 38 on, two points occurred, the turning-off one in 41 and the turning-on one in 49, that went over the tripping threshold in A, and more precisely next to the upper limit C and to the lower limit B, respectively. This relatively small energy "waste" has been used to cope with the false night and false day situations, allowing to realize a relay that is much more reliable than the traditional ones.

## Claims

1. Zero-hysteresis crepuscular relay substantially comprising:

   an adjusting potentiometer (19) for tripping threshold and upper and lower illuminance limits;
   at least one photo-sensitive element (21) to generate current illuminance signals;
   at least one light-emitting element (27),
   an electro-mechanical relay (26); and
   a power supply (17);

   characterised in that it further comprises:
   an hysteresis-recovering circuit (25) connected to said potentiometer (19) and to said photo-sensitive element (21);
   and said light-emitting element (27);
   said circuit (25) receiving as input tripping threshold, upper and lower illuminance signals ($V_{IMBA}$, $V_{BUIA}$, $V_{LUCA}$) and current illuminance signals, said circuit (25) during normal operation turning on or off said relay when the value of said current illuminance signal is equal to said single tripping threshold ($V_{IMBA}$), said circuit (25) avoiding turning on or off said relay during an anomalous operation, when between a turning off and the following turning on, or between a turning on and the following turning off, the value of said current illuminance signal has not respectively reached the lower illuminance limit ($V_{BUIA}$) or the upper one ($V_{LUCA}$).

2. Crepuscular relay according to claim 1, characterised in that said hysteresis-recovering circuit (25) is connected to at least one light-emitting element (27) that signals, getting various fixed or intermittent colours, the environmental illuminance status.

3. Crepuscular relay according to claim 1 or 2, characterised in that said circuit (25) is an electronic circuit composed of analogue components.

4. Crepuscular relay according to claim 1 or 2, characterised in that said circuit (25) is an electronic circuit composed of integrated components.

5. Crepuscular relay according to claim 1 or 2, characterised in that said circuit (25) is an electronic circuit composed of programmable-logic components.

**Patentansprüche**

1. Dämmerungsschalter mit Null-Hysterese, im Wesentlichen enthaltend:

   ein Einstell-Potentiometer (19) für eine Auslöseschwelle und obere und untere Beleuchtungsstärken-Grenzwerte,
   mindestens ein lichtempfindliches Element (21) zum Erzeugen von Strom-Beleuchtungsstärken-Signalen,
   mindestens ein lichtemittierendes Element (27),
   einen elektromechanischen Schalter (26) und
   eine Stromversorgung (17),

   dadurch gekennzeichnet, dass er ferner enthält:

   einen Hysterese-Rückgewinnungs-Schaltkreis (25), der mit dem Potentiometer (19) und mit dem lichtempfindlichen Element (21) und dem lichtemittierenden Element (27) verbunden ist, wobei der Schaltkreis (25) als Input die Auslöseschwelle, Signale oberer und unterer Beleuchtungsstärken ($V_{IMBA}$, $V_{BULA}$, $V_{LUCA}$) und Strom-Beleuchtungsstärken-Signale empfängt, wobei der Schaltkreis (25) im normalen Betrieb den Schalter ein- oder ausschaltet, wenn der Wert des Strom-Beleuchtungsstärken-Signals gleich der einzelnen Auslöseschwelle ($V_{IMBA}$) ist, wobei der Schaltkreis (25) ein Ein- oder Ausschalten des Schalters während eines anormalen Betriebs vermeidet, wenn zwischen einem Ausschalten und dem folgenden Einschalten oder zwischen einem Einschalten und dem folgenden Ausschalten der Wert des Strom-Beleuchtungsstärken-Signals jeweils den unteren Beleuchtungsstärken-Grenzwert ($V_{BUIA}$) oder den oberen ($V_{LUCA}$) nicht erreicht hat.

2. Dämmerungsschalter nach Anspruch 1, dadurch gekennzeichnet, dass der Hysterese-Rückgewinnungs-Schaltkreis (25) mit mindestens einem lichtemittierenden Element (27) verbunden ist, das den Beleuchtungsstärken-Status der Umgebung signalisiert, indem es verschiedene festgesetzte oder intermittierende Farben bekommt.

3. Dämmerungsschalter nach Anspruch 1 oder 2, dadurch gekennzeichnet, dass der Schaltkreis (25) ein elektronischer Schaltkreis ist, der sich aus analogen Komponenten zusammensetzt.

4. Dämmerungsschalter nach Anspruch 1 oder 2, dadurch gekennzeichnet, dass der Schaltkreis (25) ein elektronischer Schaltkreis ist, der sich aus integrierten Komponenten zusammensetzt.

5. Dämmerungsschalter nach Anspruch 1 oder 2, dadurch gekennzeichnet, dass der Schaltkreis (25) ein elektronischer Schaltkreis ist, der sich aus programmierbar-logischen Komponenten zusammensetzt.

**Revendications**

1. Relais crépusculaire zéro-hystérésis comprenant essentiellement :

   - un potentiomètre ajustable (19) pour régler un seuil déclencheur et une limite d'éclairement haut et bas ;
   - au moins un élément photosensible (21) pour générer des signaux d'éclairement actuels ;
   - au moins un élément (27) électroluminescent ;
   - un relais électromécanique (26) ; et
   - une alimentation en puissance (17) ;

   caractérisé en ce qu'il comprend en outre :

   - un circuit (25) de récupération d'hystérésis relié audit potentiomètre (19) et audit élément (21) photosensible et audit élément électroluminescent (27) ; ledit circuit (25) recevant comme entrée un seuil déclencheur, des signaux d'éclairement haut et bas ($V_{IMBA}$, $B_{BUIA}$, $V_{LUCA}$) et des signaux d'éclairement actuels, ledit circuit (25), pendant une opération normale, ouvrant ou fermant ledit relais lorsque la valeur dudit signal d'éclairement actuel est égale audit seuil déclencheur simple ($V_{IMBA}$), ledit circuit (25) empêchant l'ouverture ou la fermeture dudit relais pendant une opération anormale, lorsque entre une fermeture et l'ouverture suivante, ou entre une ouverture et la fermeture suivante, la valeur dudit signal d'éclairement actuel n'a pas atteint, respectivement, la limite d'éclairement basse ($B_{BUIA}$) ou la limite haute ($V_{LUCA}$).

2. Relais crépusculaire selon la revendication 1, caractérisé en ce que ledit circuit (25) de récupération d'hystérésis est relié à au moins un élément (27) électroluminescent qui signale l'état d'éclairement de l'environnement, en recevant des couleurs variables fixes ou intermittentes.

3. Relais crépusculaire selon la revendication 1 ou 2, caractérisé en ce que ledit circuit (25) est un circuit électronique composé de composants analogiques.

4. Relais crépusculaire selon la revendication 1 ou 2, caractérisé en ce que ledit circuit (25) est un circuit électronique composé de composants intégrés.

5. Relais crépusculaire selon la revendication 1 ou 2, caractérisé en ce que ledit circuit (25) est un circuit électronique composé de composants logiques programmables.

FIG. 1

FIG. 2

FIG. 4

FIG. 3

EP 0 744 882 B1

# FIG. 5

```
          PEEL22CV10
          Zero Hysteresis
              .   \/   
    E    {  1      24 }   Vcc
   RC3   {  2      23 } - LAMP
   IMB   {  3      22 } - RC2
    B    {  4      21 } - D
  SLUCA  {  5      20 } - U4B
  IMBA   {  6      19 } - F
  SBUIA  {  7      18 } - HIST∅
   OE    {  8      17 } - RC1
         {  9      16 } - OUT
         { 10      15 } - A
         { 11      14 } - RC5
  Gnd    { 12      13 }
              |_____|  ~25
```

( − = output )

## PIN DEFINITIONS

### Inputs

| | |
|---|---|
| E | pin 1 |
| RC3 | pin 2 |
| IMB | pin 3 |
| B | pin 4 |
| SLUCA | pin 5 |
| IMBA | pin 6 |
| SBUIA | pin 7 |
| OE | pin 8 |

### OUTPUTS

| | | |
|---|---|---|
| RC5 | pin 14 | = pos com |
| A | pin 15 | = pos com |
| OUT | pin 16 | = pos com |
| RC1 | pin 17 | = neg com |
| HIST∅ | pin 18 | = pos com |
| F | pin 19 | = pos com |
| U4B | pin 20 | = pos com |
| D | pin 21 | = pos com |
| RC2 | pin 22 | = pos com |
| LAMP | pin 23 | = neg com |

### INTERNAL NODES

| | | |
|---|---|---|
| AC | node 25 | "Asynchronous Clear" − not used |
| SP | node 26 | "Synchronous Preset" − not used |

| | | |
|---|---|---|
| Enable | LAMP | = OE |
| Enable | RC2 | = OE |
| Enable | D | = OE |
| Enable | U4B | = OE |
| Enable | F | = OE |
| Enable | HIST∅ | = OE |
| Enable | RC1 | = OE |
| Enable | OUT | = OE |
| Enable | A | = OE |
| Enable | RC5 | = OE |

### TEST VECTORS

## EQUATIONS

$$RC5 = \overline{A}$$
$$A = \overline{B}$$
$$OUT = (\overline{IMB})$$
$$HIST\emptyset = \overline{U4B} \cdot SLUCA \cdot D + {}$$
$$+ U4B \cdot SLUCA \cdot D \cdot IMBA + {}$$
$$+ U4B \cdot SLUCA \cdot \overline{IMBA} + {}$$
$$+ U4B \cdot SLUCA \cdot \overline{D}$$
$$F = \overline{E}$$
$$U4B = SBUIA + U4B \cdot SLUCA$$
$$D = SLUCA \cdot D \cdot \overline{U4B} + {}$$
$$+ SLUCA \cdot D \cdot IMBA + {}$$
$$+ IMBA \cdot \overline{U4B} + {}$$
$$+ IMBA \cdot \overline{SLUCA} + {}$$
$$+ SBUIA$$
$$RC2 = \overline{D}$$
$$LAMP = \overline{(RC5 + SLUCA \cdot D \cdot \overline{U4B} + SLUCA \cdot D \cdot IMBA)}$$